# EUROPEAN PATENT SPECIFICATION

(11) **EP 1 093 151 B1**
(45) Date of publication and mention of the grant of the patent: **01.09.2010**
(21) Application number: 00120100.3
(22) Date of filing: 15.09.2000
(51) Int. Cl.: H01J 49/16, H01J 49/04, G01N 27/68

(54) **Ion source, mass spectrometer, mass spectrometry, and monitoring system**
Ionenquelle, Massenspektrometer, Massenspektrometrie und Überwachungssystem
Source d'ions, spectromètre de masse, spectrométrie de masse et système de contrôle

(30) Priority: 20.09.1999 JP 26604499; 10.08.2000 JP 2000247937
(43) Date of publication of application: 18.04.2001
(73) Proprietor: Hitachi, Ltd., Chiyoda-ku, Tokyo 100-8010 (JP)
(72) Inventor: Sakairi, Minoru, Tokorozawa-shi, Saitama 359-0003 (JP); Hashimoto, Yuichiro, Kokubunji-shi, Tokyo 185-0013 (JP); Yamada, Masuyoshi, Ichikawa-shi, Chiba 272-0824 (JP); Suga, Masao, Hachioji-shi, Tokyo 192-0043 (JP); Kojima, Kyoko, Hino-shi, Tokyo 191-0065 (JP)
(74) Representative: Strehl Schübel-Hopf & Partner

(56) References cited:
- JP-A- 11 218 521
- US-A- 4 531 056
- US-A- 5 485 016
- GRAVENDEEL B ET AL: "Clustered negative ions in atmospheric negative corona discharges in the Trichel regime" JOURNAL OF PHYSICS. B. ATOMIC AND MOLECULAR PHYSICS, INSTITUTE OF PHYSICS, LONDON, GB, vol. 20, 1987, pages 6337-6361, XP002221637 ISSN: 0022-3700
- PATENT ABSTRACTS OF JAPAN vol. 014, no. 371 (E-0963), 10 August 1990 (1990-08-10) & JP 02 135655 A (HITACHI LTD), 24 May 1990 (1990-05-24)

## Description

### BACKGROUND OF THE INVENTION

The present invention relates to an ion source, a mass spectrometer and a monitoring system or a monitor employing the ion source.

Conventionally, as a method for detecting a minor component in a gas or a liquid in high sensitivity, a method for detecting an ion generated by ionization of a measuring object in high sensitivity by means of a mass spectrometer has been used.

There are various methods for ionizing a sample. One of various sample ionizing methods is an atmospheric pressure chemical ionization employing corona discharge. As disclosed in Japanese Patent Application Laid-Open No. 51-8996 (1976), this is a method to introduce a sample in a corona discharge region generated at the tip end of a needle electrode by applying a high voltage for ionizing the sample. At this time, in addition to the case where the sample is directly ionized by corona discharge (primary ionization), the sample is also ionized by ion molecule reaction (secondary ionization) to result in high efficiency ionization of sample molecule.

On the other hand, as disclosed in Japanese Patent Application Laid-Open No. 6 -310091 (1994), as an ionization method by corona discharge, there has been proposed a method for ionizing without directly introducing a sample gas into a corona discharge region. Namely, the proposed method is to use a primary ion generated in a separately provided corona discharge region and to efficiently perform secondary ionization of the sample molecule not passing through the corona discharge region by ion molecule reaction. This method is particularly effective for an objective sample, such as silane gas, which cannot be directly ionized using corona discharge for extreme contamination of ion source by discharge product.

Furthermore, there is a method disclosed in U. S. Patent No. 4,023,398 to French et al. In the shown example, there is disclosed a technology, in which a curtain gas is blown between the corona discharge region and an aperture for introducing ion into vacuum in order to prevent introduction of a carrier gas into a mass spectrometric portion under vacuum condition for transporting the sample. Thereby, the discharge efficiency can be improved when a vacuum discharge system such as a cryopump is used.

Furthermore, Japanese Patent Application Laid-Open No. 3-179252 (1991) discloses a method in which, a liquid sample flows through a hollow needle electrode, a fine droplet of the liquid sample ionized at the tip end of the needle is efficiently vaporized by a dry gas flowing in opposition. On the other hand, dispersion of the ionized sample is suppressed to improve maintenance efficiency. However, Japanese Patent Application Laid-Open No. 3-179252 (1991) does not disclose a solution to problems in the stability of discharge.

In the prior art disclosed in the above-identified Japanese Patent Application Laid-Open No. 51-8996 (1976) and Japanese Patent Application Laid-Open No. 3-179252 (1991), when the concentration of a measuring sample is low (for example, upon measurement of minor component in the air or upon measuring minor component in the liquid), the intensity of ions of the component is greater compared to the ions of the measuring sample, or ions originated from a component which is present in a large amount (for example, ion or the like generated by ion molecule reaction), becomes extremely high. Accordingly, when the sensitivity of a detector is set adapting to ions of the measuring sample in fine amount, ions of the component which are present in a large amount or the ions originated from the component which are present in a large amount may reach the detector to cause a large current to flow at a burst to damage the detector to gradually degrade an amplification factor of the current.

On the other hand, when molecules corresponding to a component present in large amount or molecules corresponding to ions originated from the component present in large amount can be ionized easier than molecules of the objective sample, generation efficiency of the ion of the objective sample is lowered to result in a lowering of the sensitivity. Furthermore, in case of an ion trap type mass spectrometer performing mass spectrometric analysis of the accumulated ion by scanning a high frequency voltage after accumulating the ions, ions less than or equal to a mass number corresponding to amplitude of the high frequency voltage to be applied may directly reach the detector after passing through an ion trap mass spectrometric portion. Accordingly, when ions are present in a large amount, the detector is damaged to gradually degrade the current amplification.

On the other hand, Japanese Patent Application Laid-Open No. 3-179252 (1991) is related to the ion source for analyzing the liquid sample but has no disclosure for analysis of gas.

Further, the method disclosed in U. S. Patent No. 4,023,398, while introduction of the carrier gas into vacuum by using the curtain gas, the obtained mass spectrum is not different from the prior art. Therefore, a problem similar to that in the prior art can be encountered.

Furthermore, in the prior art set forth above, the components in the gas to be measured may be deposited on the tip end of the needle to make the corona discharge unstable to cause difficulty in continuous measurement for a long period. In case of the method disclosed in Japanese Patent Application Laid-Open No. 6-210091 (1994), nothing has been discussed with respect to continuous operation over a long period in the extent of one month.

### SUMMARY OF THE INVENTION

Accordingly, it is an object of the present invention to provide an ion source using a corona discharge for efficiently generating ions of a sample and a device employing the same.

Another object of the present invention is to provide an ion source which can maintain stable discharge for a long period, and a device employing the same.

The objects are met by the ion source defined in appended claim 1. The subclaims relate to preferred embodiments.

### 1) Means for Improving Ion Generation Efficiency

At first, as means for improving the ion generation efficiency in corona discharge generated at the tip end of needle electrode by applying high voltage, a direction connecting a needle electrode and a partitioning wall having an opening for taking the generated ion into a mass spectrometric portion, namely a direction along which the ion is drawn from a discharge region , and a direction of flow of a sample gas are differentiated. Thereby, the generation efficiency of ions of the objective sample can be significantly improved.

By taking the construction as set forth above, the following effect is caused. For example, primary ion molecular reaction in the case where chlorophenols (CP) in dry air is monitored using negative corona discharge becomes as follow:

O₂ + e⁻ → O₂⁻

(negative corona discharge)

O₂ + N₂ → 2NO

(negative corona discharge)

O₂ + NO → NO₃⁻

O₂⁻ + (CP) → (CP-H)⁻ + HO₂

Here, (CP-H)⁻ represents a negative ion removed proton from CP. As can be appreciated from the foregoing expression, basically, O₂⁻ generated by negative corona discharge intervenes reaction. By reaction of N₂ and O₂ under corona discharge, NO₃⁻ is easily generated via the NO as intermediate. Thus, ions having a high strength can be monitored. Since NO₃⁻ has high acidity, it will not react with CP. Accordingly, what is monitored when the concentration of N₂ is quite high in comparison with CP, is mostly NO₃⁻, and little (CP-H)⁻.

Among such reaction process, when reaction of O₂⁻ + NO → NO₃⁻ can be restricted, reduction of O₂⁻ can be suppressed. By this, O₂⁻ + CP → (CP-H)⁻ + HO₂ is progressed. Thus, NO₃⁻ possibly generated in large amount can be significantly reduced. Accordingly, the generation amount of the objective (CP-H) can be increased. For restricting the generation of NO₃⁻, it is important not to form overlapping regions of O₂⁻ and NO. One approach for this is to differentiate the direction of ion movement and the direction of the intermediate to flow by the electric field to make the present period of the intermediate in the corona discharge region extremely short. Particularly, when the foregoing two directions are opposite, significant effect can be achieved. At this time, in the reaction process set forth above, the presence of the intermediate NO can be ignored. Accordingly, the foregoing reaction is substantially:

O₂ + e⁻ → O₂⁻

(negative corona discharge)

O₂ + CP → (CP-H)⁻ + HO₂

This mode of reaction is quite desirable from the view point of monitoring of (CP-H)⁻ at high precision.

### 2) Means for Maintaining Discharge Period for Long Period

The present invention provides a mass spectrometer. In an embodiment, the mass spectrometer has an ion source performing ionization of a sample by generating a corona discharge at a tip end of a needle electrode by applying a high voltage to said needle electrode, the ion source is constructed to form an angle between a direction extend ion across the needle electrode and the opening portion for taking the generated ion into the mass spectrometric portion, namely a direction along which the ion is drawn from the discharge region, and a direction of flow of the sample gas greater than or equal 90° (in other view, a direction extending across the tip end of the needle electrode and the first opening for feeding the ion to the mass spectrometric portion and a direction extending across the center of the first opening portion and the tip end of the needle electrode form an angle less than or equal to 90° .

With the construction set forth above, in addition to improvement of the ion generation efficiency of the measurement objective substance, stable discharge can be maintained for a long period. One of the reasons is set out hereinafter.

The reason why stable discharge can be maintained for a long period will be discussed in terms of negative corona discharge.

The reason why stable discharge cannot be maintained for a long period when gas flow is not present in the discharge region. Then components in the gas are deposited on the tip end of the needle electrode to make curvature greater to cause instability of discharge. In such case, fluctuation is caused in the current value of discharge to make ionization unstable and the ion strength measured by the mass spectrometer also fluctuates. In order to make analysis with high reliability, maintenance to frequently change the needle electrode and sharpening the tip end of the needle electrode is required.

When negative corona discharge is used, an electron is discharged from the tip end of the needle electrode applied with negative high pressure to collide with neutral molecule in the gas to cause ionization. The ionizing region is quite close to the tip end (within 1 mm). The negative ion generated is moved toward the counter electrode by the electrical field between the needle electrode and the counter electrode. The phenomenon that the radius of curvature at the tip end of the needle electrode becomes greater, results in fluctuation of the discharge current value for the following reason.
1) The negative ion generated in the ionizing region in the vicinity of the tip end of the needle electrode may weaken the field intensity in the tip end region of the needle electrode.
2) When the field intensity is weakened, the discharge current drops.
3) The negative ions generated in the ionizing region are moved toward the counter electrode by the force of the electric field.
4) The field intensity in the tip end region of the needle electrode becomes enhanced again.

By repeating the foregoing 1) to 4), the flow of the discharge current flows. When the radius of curvature of the tip end of the needle electrode is small, even if the field intensity is weakened, the discharge current may not be lowered to permit continuous discharge. However, if the radius of curvature of the tip end of the needle electrode is increased, due to effect of space charge of the negative ion, the field intensity is lowered to result in lowering of the discharge current. When the voltage is lowered in order to prevent lowering of the discharge current, the discharge mode may transit from the corona discharge to spark discharge to make the discharge mode unstable and not suited for analysis.

When flow of the gas is caused in the ionizing region, the negative ions possibly cause space charge which is dispersed to restrict lowering of the field intensity of the tip end of the needle electrode.

Accordingly, by generating the gas flow in the tip end region of the needle electrode, it is possible to maintain stable discharge even when the radius of curvature of the tip end of the needle electrode becomes large for deposition in certain extent.

When the sample gas is flown from the route side of the needle the region actively cause ionization in the vicinity of the tip end of the needle electrode falls into the disturbed condition to cause difficulty in efficiently dispersing the space charge.

On the other hand, by providing a function for monitoring the discharge current value and, if the amplitude of the current value becomes greater than or equal to a certain value, causing an alarm for exchanging the needle , the maintenance timing of the needle electrode can be known properly.

### BRIEF DESCRIPTION OF THE DRAWINGS

The present invention will be understood more fully from the detailed description given hereinafter and from the accompanying drawings of the preferred embodiment of the present invention, which, however, should not be taken to be limitative to the invention, but are for explanation and understanding only.

In the drawings:
Fig. 1 is an illustration showing an example intended to perform dioxin monitoring by means of a mass spectrometer having an ion source according to the present invention;
Fig. 2 is an illustration showing an example intended to perform dioxin monitoring by means of a mass spectrometer having an ion source according to the present invention;
Fig. 3 is a detailed illustration of the ion source;
Fig. 4 is an explanatory illustration of the ion source according to the present invention;
Fig. 5 is an illustration showing a construction of an ion trap portion of a mass spectrometer;
Fig. 6(a) is an illustration showing an opposing relationship between an ion and a sample;
Fig. 6(b) is an illustration showing the relationship between an ion and a sample;
Fig. 6(c) is an illustration showing the relationship between an ion and a sample;
Fig. 7 is an illustration showing an example of voltage application in the ion source;
Fig. 8 is an illustration showing a construction of an alternative embodiment of Fig. 3;
Fig. 9 is an illustration showing a construction of an alternative embodiment of Fig. 3;
Fig. 10 is a characteristic chart;
Fig. 11(a) is an illustration showing an example of a mass spectrum obtained by the ion source of the present invention;
Fig. 11(b) is an illustration showing an example of a mass spectrum obtained by the ion source of the present invention;
Fig. 11(c) is an illustration showing an example of a mass spectrum obtained by the ion source of the present invention;
Fig. 12(a) is a constructional illustration showing one embodiment of an explosive detector having the ion source according to the present invention;
Fig. 12(b) is a constructional illustration showing one embodiment of an explosive detector having the ion source according to the present invention;
Fig. 12(c) is a constructional illustration showing one embodiment of an explosive detector having the ion source according to the present invention;
Fig. 13(a) is a constructional illustration showing one embodiment of an explosive detector having the ion source according to the present invention;
Fig. 13(b) is a constructional illustration showing one embodiment of an explosive detector having the ion source according to the present invention;
Fig. 14 is an illustration showing an example of mass spectrum to be obtained from the ion source of the present invention;
Fig. 15 is an illustration showing a detection algorithm in explosive detection;
Fig. 16 is a sectional illustration showing one example of a mass spectrometer with the ion source according to the present invention;
Fig. 17 is a constructional illustration of an example of a vaporizer to be employed in the liquid chromatographic mass spectrometer;
Fig. 18 is an illustration showing a construction of an alternative embodiment of Fig. 3;
Fig. 19 is an illustration showing an example of an alternative construction of the ion source of Fig. 3 which is not an embodiment of the invention;
Fig. 20 is a constructional illustration extended the ion source portion of Fig. 3;
Fig. 21 is an illustration showing a construction of an alternative embodiment of Fig. 20;
Fig. 22 is an illustration showing a construction of an alternative embodiment of Fig. 20; and
Fig. 23 is an illustration showing a construction of an alternative embodiment of Fig. 20.

### DESCRIPTION OF THE PREFERRED EMBODIMENTS

The present invention will be discussed hereinafter in detail in terms of preferred embodiments of the present invention with reference to the accompanying drawings. In the following description, numerous specific details are set forth in order to provide a thorough understanding of the present invention. It will be obvious, however, to those skilled in the art that the present invention may be practiced without these specific details. In other instance, well-known structures are not shown in detail in order to avoid unnecessary obscurity of the present invention.

### Application to Dioxin Monitor

An ion source according to the present invention will be discussed in terms of application to a dioxin monitor.

A mass spectrometer employing an ion source according to the present invention is directly connected to an incinerator or the like and can perform continuous monitoring components of an exhaust gas from the incinerator or the like. Particularly, it becomes possible to significantly reduce generation amount of dioxins by measuring dioxins or chlorobenzens, chlorophenols, hydrocarbons as precursor discharged from the incinerator and by controlling combustion condition of the incinerator depending upon the result of measurement.

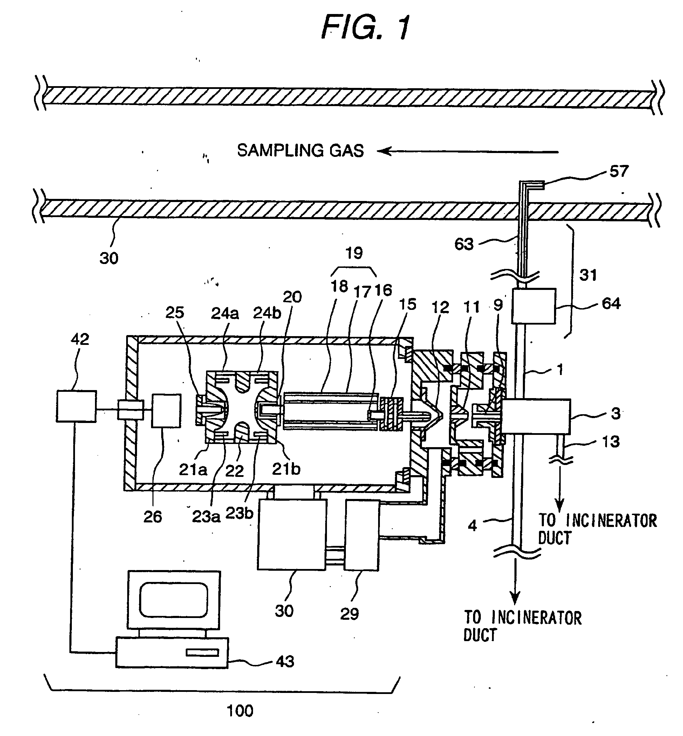

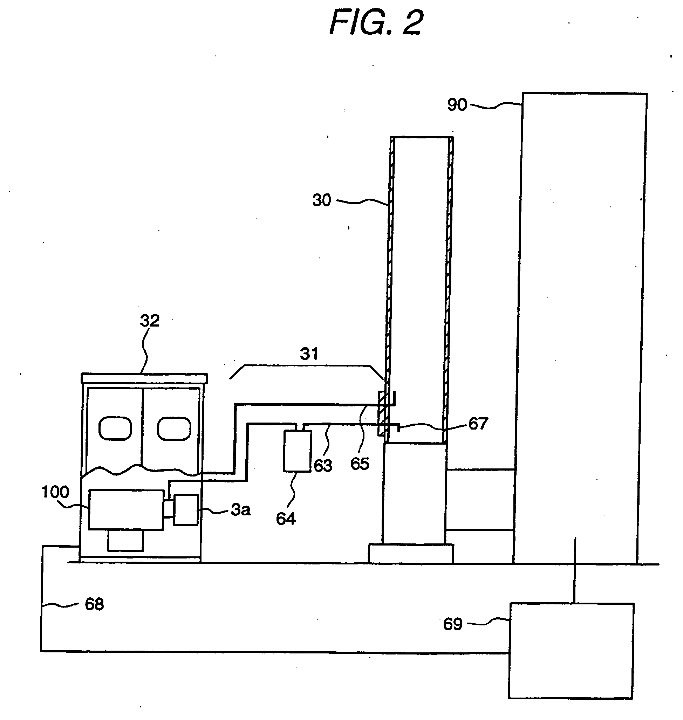

Figs. 1 and 2 show a construction of an embodiment of a monitoring system according to the present invention. In this case, the monitoring system is constructed with a gas sampling part 31 sampling a sample gas from a flue gas duct 30 of the incinerator 90, a monitor 32 detecting a measurement objective substance in a sample gas, and a combustion control device 69 for reflecting the result of detection to combustion control, and so forth. The monitor portion corresponds to a mass spectrometer employing the ion source according to the present invention.

The gas sampling part 31 is constructed with an exhaust gas inlet pipe 63, a filter 64 and an exhaust gas outlet pipe 65 for feeding the sampled gas to the monitor 32 stably, without loss due to absorption or condensation of the measurement objective substance at the midway and in a constant flow rate, or to return to the flue gas duct 30. Therefore, the overall gas sampling part 31 is heated at a temperature in a range of about 100 °C to about 300 °C. The filter 64 is designed for avoiding penetration of dust or the like contained in the exhaust gas of the incinerator into the monitor 32 and is provided in the vicinity of the flue gas duct 30 so as to reduce contamination of the exhaust gas inlet pipe 63, the monitor 32 and so forth as much as possible. In the monitor 32, the measurement objective substance in the fed sample gas is selectively and efficiently ionized, and mass spectrometric analysis of the generated ion is performed in the mass spectrometer 100 for continuously detecting the measurement objective substance.

From an ion current value in a mass number originated from the measurement objective substance, a relationship between an amount of the preliminarily prepared substance and an ion current value (analytical curve), presenting the amount of the objective substance can be derived. For example, in case of 2,3-dichlorophenol (molecular weight is 162 and mass number of monitored ion is 161), variation of ion strength in relation to concentration of the sample gas is measured to generate the analytical curve. On the basis of this, from the monitored ion strength, a concentration data of the sample gas is estimated. Obtained data is further cleaned up to be stored together with concentration of the component and other parameter, and in conjunction therewith, to be output to a CRT or a printer. On the other hand, the obtained data is also fed to a combustion control unit 69 as data for controlling combustion in a garbage incineration plant via a signal line 68, for performing combustion control in the incinerator 90.

Chlorobenzens as precusor of dioxin captures one electron to generate molecular ion M⁻. Chlorophenols provides a pseudo molecular ion (M-H)⁻. In case of trichlorophenol containing three chlorine atoms, M⁻ can be monitored. Dioxins provides (M-Cl)⁻, (M-Cl+O)⁻ and so on in addition to molecular ion M⁻. By selectively detecting these characteristic peak, high sensitivity measurement with high selectivity can be performed.

For estimating dioxin concentration from concentration of chlorobenzens, chlorophenols, preliminarily derived correlation is used. Since correlation is slightly different depending on the system, type and so forth of the incinerator or the like, it is preferable to preliminarily obtain data of correlation per incinerator, to which the monitor is installed in order to estimate the dioxin concentration at higher precision.

When an ion trap mass spectrometer is used, further higher selectivity can be obtained in comparison with the normal mass spectrometer. It is a MS/MS method, in which an energy is infused to the molecular ion captured within the ion trap mass spectrometer to cause collision with a buffer gas (He or the like) within the electrode to cause dissociation of the molecular ion. In case of organic chlorine-based chemical compound, an ion releasing one or two chlorine atoms from molecular ion is monitored by the MS/MS method. For example, in case of 2, 4-dichlorophonol, upon ionizing using negative corona discharge, negative ion of (M-H)⁻ (M: molecule, H: hydrogen) is generated. Dissociating this negative ion by MS/MS method, a negative ion released single chlorine atom is generated. Monitoring this negative ion may provide quite high selectivity. By determining the quantity of the negative ion amount released single chlorine atom from the peak intensity, the amount of dichlorophenol in the exhaust gas can be estimated. When a plurality of kinds of molecular species to be measured are present, this measurement process may be repeated. In case of dioxins, COCl releasing process is monitored in addition to chlorine releasing process. Particularly, releasing of COCl is the process monitored only in dioxins. Conversely, when this process is monitored, it can be said that presence of TCDD or toxic dioxins is proven. In case of the organic chlorine-based chemical compound, when number of chlorine is increased, chemically stable substance is formed. Therefore, in case of dioxins having large number of chlorine, dioxin precusor or the like, it is effective to dissociate foreign matter overlapping the measuring objective ion instead of the measuring objective ion, to measure the measuring objective ion in high sensitivity.

In the foregoing example, discussion has been given mainly for the case of the atmospheric pressure chemical ionization method of negative ionizing mode. Various components are contained in the exhaust gas. Concerning hydrocarbon type compound of aromatic compound represented by benzene or the like, measurement of atmospheric pressure chemical ionization method in positive ionization mode becomes possible. For example, in case of benzene or monochlorobenzene, ion species of M⁺ is generated by the atmospheric pressure chemical ionization method in positive ionization mode. Accordingly, in actual sample gas measurement, by alternately measuring positive and negative ionization modes, it is possible to increase the information amount in the sample gas.

Here, discussion has been given for monitoring of dioxin and compounds associated therewith in the exhaust gas mainly discharged from the garbage processing facility. However, dioxin and its associated compounds contained in the exhaust gas discharged during metal refining process or atmospheric air may also be monitored by a similar device and method. By the monitoring device, how much dioxins is contained in the exhaust gas of the incinerator or the like and how much fluctuation is caused can be known directly to achieve real time dioxin monitoring. Furthermore, from initiation of combustion in the incinerator to be discharged from an exhaust flue to the atmosphere, the exhaust gas is discharged through various spaces of different temperatures and through various chemical processes caused in the exhaust gas. Even in each of such complicate processes, generation and decomposition of dioxin and so forth can be traced. Naturally, it is thus becomes possible to obtain information for modification and optimization of the process conditions for reducing dioxins. Also, upon analyzing fine component in other gas, the device and method are effective in view of highly efficient ionization and expansion of life time.

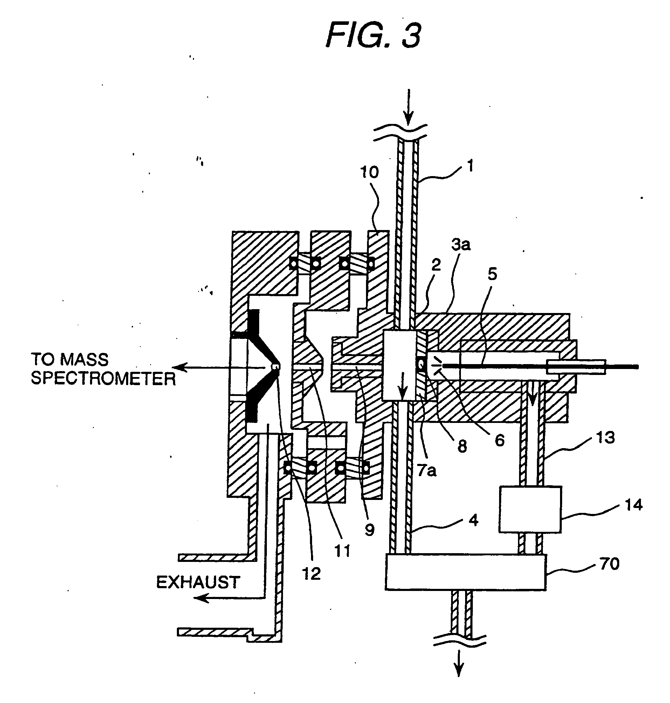

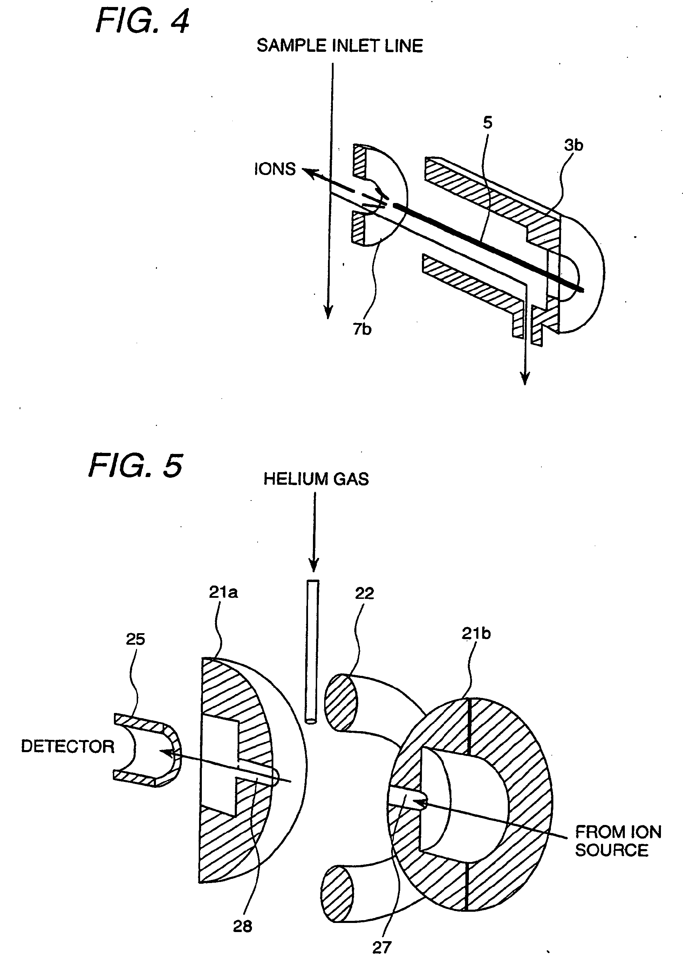

Fig. 3 shows a construction of the ion source characterized by substantially opposing an introducing direction of the sample to the corona discharge region and withdrawing direction of the ion by the corona discharge in corona discharge generated at the tip end of the needle electrode by application of high voltage, and is a partially enlarged view of Fig. 1. Placement of the introducing direction of the sample to the corona discharge region and withdrawing direction of the ion by the corona discharge is significantly different to the prior art. Fig. 4 is an illustration showing a part of three-dimensional construction of the ion source.

The sample introduced through a sample feed piping 1 is once introduced into the ion drift region 2. The ion drift region 2 is placed in substantially atmospheric pressure condition. A part of the sample introduced into the ion drift region 2 is introduced into a corona discharge region 3, and remaining is discharged out of the ion source through a sample output piping 4. The sample introduced into the corona discharge region 3 is introduced into a corona discharge region 6 generated at the tip end of the needle electrode 5 by applying a high voltage and ionized therein. At this time, the sample is introduced in a direction substantially opposed to the flow of ion drifting toward the counter electrode 7 from the needle electrode 5. The generated ion is introduced into the ion drift region 2 through an opening portion 8 of the counter electrode 7. At this time, by applying a voltage between the counter electrode 7 and the first ion sampling aperture 9, ion is drifted to be efficiently introduced into the first ion sampling aperture 9. Ion introduced through the first ion sampling aperture 9 is introduced into the mass spectrometer 100 under vacuum condition through a second ion sampling aperture 11 and third ion sampling aperture 12. A region where the first ion sampling aperture 9, second ion sampling aperture 11 and third ion sampling aperture 12 are present, is a differential exhaust region for connecting the ion drift region 2 in substantially atmospheric pressure condition and the mass spectrometer under vacuum condition. On the other hand, it is important to control the flow rate of the sample to be introduced into a corona discharge region 6 for measuring the ion stably and in high precision. Therefore, an ion outlet piping 13 from the ion source and a flow controller 14 of ion source are provided in the corona discharge region 3. On the other hand, in view of prevention of the absorption of the sample in the ion drift region 2 and the corona discharge region 3, it is important to heat these regions. A sample flow rate passing through the ion outlet piping 13 from the ion source and a sample flow rate passing through the flow controller 14 of ion source can be determined by the capacity of an intake pump 70, such as a diaphragm pump, and a conductance of piping provided downstream thereof. As set forth above, one of characteristics of the ion source of the present invention is that the intake pump 70 for introducing the sample into the corona discharge region is provided on the side of the ion outlet piping 13 from the ion source or the flow controller 14 of ion source instead of the sample feed piping 1. Namely, absorption or the like of the sample in the suction pump 70 which can be a problem in the case where the intake pump 70 is arranged on the side of the sample feed piping 1.

Hereinafter, further detailed embodiment will be discussed.

The sample introduced through the sample feed piping 1 is once introduced into the ion drift region 2. A part of the sample introduced into the ion drift region 2 is introduced into the corona discharge region 3 (3a is a main body there of, 3b, 3c, 3d, 3e, 3f are the same), and remainder is discharged out of the ion source through the sample output piping 4. For the sample introduced through the sample feed piping 1, the flow rate of the sample passing through the ion outlet piping 13 from the ion source is about 10 to 2000 ml/min. It should be noted that, as the sample feed piping 1 and the sample output piping 4, 1/4 inches stainless electrolytic polishing piping or stainless piping coated with fused quartz on the inner peripheral surface may be used. The sample introduced into the corona discharge region 3 is introduced into the corona discharge region 6 generated at the tip end of the needle electrode 5 by application of the high voltage for ionization. When positive ions are generated, about 1 to 6 kV is applied to the needle electrode 5, and when negative ions are generated, about -1 to -6 kV is applied to the needle electrode 5. At this time, it is important to cause discharge between the tip end of the needle electrode 5 and the counter electrode 7a instead of between the tip end of the needle electrode 5 and an outer wall of the corona discharge region 3a located therearound. An electric field is formed for shifting the ion generated at the tip end of the needle electrode 5 in the direction of the counter electrode 7. Accordingly, a distance between the tip end of the needle electrode 5 and the counter electrode 7a (about 3 mm) is shorter than a distance between the tip end of the needle electrode 5 and the outer wall of the corona discharge region 3a located therearound (about 5mm). At this time, the sample is introduced in the direction substantially opposing to the flow of the ion drifted toward the counter electrode 7 (distance between the needle electrode 5 and the counter electrode 7 is about 3 mm) from the needle electrode 5. The ion generated in the corona discharge region at the tip end of the needle electrode 5 is introduced into the ion drift region 2 through the opening portion 8 (about 2 mm of diameter) of the counter electrode 7 (about 30 mm of diameter, 2 mm of thickness). At this time, by applying a voltage between the counter electrode 7 and the first ion sampling aperture 9, the ions are drifted by the electric field to be efficiently introduced into the first ion sampling aperture 9. In this case, a direction extending through the tip end of the needle electrode 5 and the center of the opening portion 8 for introducing the generated ions into the mass spectrometer and a direction to introduce the sample from the opening portion 8 to flow becomes 0° (opposing). On the other hand, the opening portion (ion outlet portion 12) from which the sample gas is discharged, is located at a position inclined toward the tip end of the needle electrode.

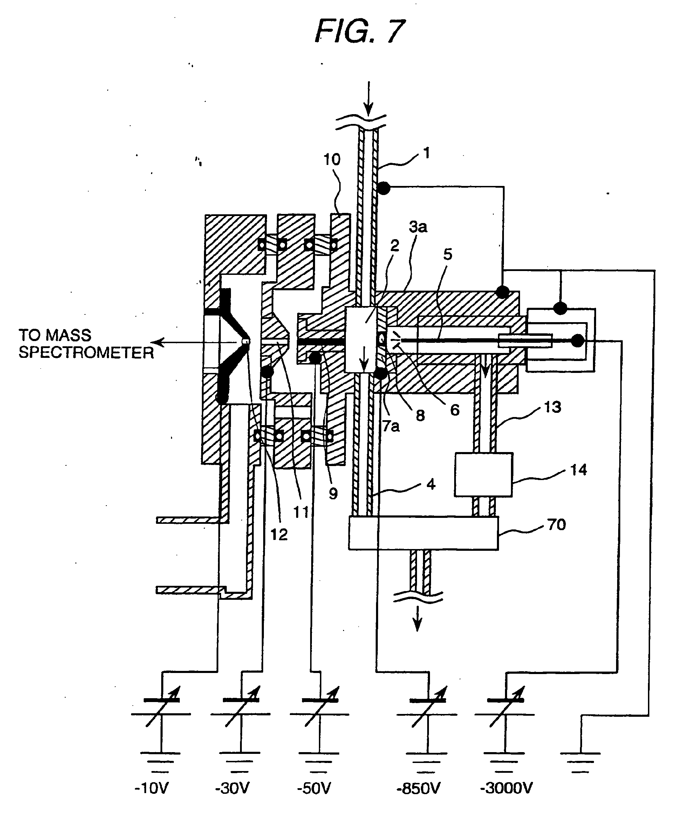

A voltage difference to be applied between the counter electrode 7 and the first ion sampling aperture 9 is variable depending upon the distance therebetween, but when the distance between the electrodes is about 1 to 10 mm, the voltage difference is about 10V to 2000V in absolute value. If the distance between the electrodes is too short, the discharge becomes unstable, and if the distance between the electrode is too long, the possibility of collision of the ion onto the partitioning wall is increased to reduce ion amount passing through the opening portion 8 to lower sensitivity. Upon measurement of the positive ion, the voltage of the counter electrode 7 is set to be higher than that of the first ion sampling aperture 9. In practice, the voltage of the counter electrode 7 is about 100 to 2000V and the voltage of the first ion sampling aperture 9 is about 10 to 200V. Conversely, upon measurement of the negative ion, opposite to the case of positive ion measurement, the voltage to be applied to the counter electrode 7 is about -100 to -2000V and the voltage to be applied to the first ion sampling aperture 9 is about -10 to -200V. When the negative ion is measured, in the ion source of the present invention, an example of the voltage to be applied to each electrode is shown in Fig. 7.

At this time, the distance between the tip end of the needle electrode 5 and the counter electrode 7a is 3 mm and the distance between the counter electrode 7 and the first ion sampling aperture 9 is 7 mm. It is important that the sample feed piping 1, the corona discharge region 3 and so forth are grounded in viewpoint of prevention of electrical shock. While for the needle electrode 5 for corona discharge, a constant voltage power source is used as shown in Fig. 7, in addition, it is effective to use a constant current power source in viewpoint of maintaining the discharge current constant. On the other hand, it is important to control the flow rate of the sample introduced into the corona discharge region 6 for measuring the ion stably and at high precision. Therefore, in the corona discharge region 3, the ion outlet piping 13 from the ion source and the flow controller 14 of ion source are provided to perform flow rate control in a range of about 10 to 2000 ml/min. In view of prevention of absorption of the sample in the ion drift region 2 and the corona discharge region 3, it is important to uniformly heat these regions. For this purpose, a cartridge heater or ceramic heater is used for heating in a range of about 50 to 400 °C. This temperature is variable depending upon the sample to be measured.

It should be noted that the reference numeral 71 denotes inner cylinder and 72, 73 denote insulators.

Detailed discussion will be given hereinafter with respect to the mass spectrometer and so forth. Upon analysis of the generated ion, various kinds of mass spectrometers can be used. The following discussion will be given for the case where an ion accumulation type ion trapping mass spectrometer is used. Similar findings apply where quadrupole mass spectrometer performing mass separation using a high frequency electric field, magnetic sector type mass spectrometer using mass diffusion in the magnetic field and other mass spectrometers are used.

The negative ion generated by the ion source used in the present invention is passes through the first ion sampling aperture 9 (about 0.3 mm diameter, about 0.5 mm length), the second ion sampling aperture 11 (about 0.3 mm diameter, about 0.5 mm length) and the third ion sampling aperture 12 (about 0.3 mm diameter, about 0.5 mm length) provided in a flange type electrode 10 headed by a heater (not shown). These apertures are heated to about 100 to 300 °C by the heater (not shown). Between the first ion sampling aperture 9, the second ion sampling aperture 11 and the third ion sampling aperture 12, a voltage can be applied to improve the transmission coefficient. Also, due to collision of the residual molecule, cleavage of ionized cluster generated by adiabatic expansion is caused to generate ions of the sample molecule. The differential discharge portion is normally discharged by roughing a vacuum pump, such as a rotary pump, a scroll pump, a mechanical booster pump or so forth. It is also possible to use a turbo molecule pump for discharging in this region. In Fig. 1, there is shown a case where the scroll pump 70 (discharge capacity about 900 l/min) is used in the discharge of the differential discharge portion, and the turbo molecule pump 30 (discharge capacity about 200 to 300 l/min) is used. As a pump discharging back pressure side of the turbo molecule pump 30, a scroll pump 29 is used. A pressure between the second ion sampling aperture 11 and the third ion sampling aperture 12 is in a range of 13 to 1300 Pa (0.1 to 10 Torr). It is also possible to form the differential discharge portion using two apertures of the first ion sampling aperture 9 and the third ion sampling aperture 12. In this case, in comparison with the foregoing case, since the inflow gas amount is increased, some measure, such as increasing discharge speed of the vacuum pump or increasing distance between the apertures may be required. On the other hand, in this case, it is important to apply a voltage between both apertures.

After passing the third ion sampling aperture 12, the generated ion is concentrated to a focusing lens 15. As the focusing lens 15, an Einzel lens normally consisting of three electrodes and so forth is used. The ion further passes through an electrode 16 with the slit. By the focusing lens 15, the ion passing through the third ion sampling aperture 12 is focused to the slit portion. Not focused neutral particles or the like collide on this slit portion to be difficult to pass toward the mass spectrometer side. Ions passed through the electrode 16 with the slit are deflected and focused by the double cylindrical type lens 19 having an inner electrode 17 having a large number of opening portions and an outer electrode 18. In the double cylindrical type lens 19, deflection and focusing is performed using the electric field of the outer electrode 18 exsudated from the opening portion of the inner electrode. The details have been disclosed in Japanese Patent Application Laid-Open No. Heisei 7-85834 (corresponding to U. S. Patent No. 5,481,107 to Ose et al.).

The ions passed through the double cylindrical type lens 19 are introduced into the ion trapping mass spectrometer. An enlarged view of the ion trapping mass spectrometer which is constructed with a gate electrode 20, end cap electrodes 21a and 21b, a ring electrode 22, shielding electrodes 23a,23b, 23c and 23d, spacer rings 24a and 24b, an ion extract lens 25, is shown in Fig. 5. The gate electrode 20 serves for preventing introduction of the ion into the mass spectrometer from outside upon extracting the ion captured in the ion trapping mass spectrometer, out of the ion trapping mass spectrometer. As shown in Fig. 5, the ion introduced into the ion trapping mass spectrometer through a ion sampling aperture 27 collides with a buffer gas, such helium or the like, also introduced into the ion trapping mass spectrometer to make the raceway track smaller. Then, by scanning the high frequency voltage applied between the end cap electrodes 21a and 21b and the ring electrode 22, ion is discharged out of the ion trapping mass spectrometer from the ion sampling aperture 28 per mass number and is detected by an ion detector 26 via the ion extract lens 25. The detected ion is amplified by an amplifier 42, and then transferred to a data processor 43. A pressure in the ion trapping mass spectrometer upon introduction of the buffer gas, is about 0.013 to 0.13 Pa (10⁻³ to 10⁻⁴ Torr). The mass spectrometer 100 is controlled by a mass spectrometer control portion. One of merits of the ion trapping mass spectrometer besides in the property of capturing ions to expand an accumulation period even if concentration of the sample is lean. Accordingly, even when the sample concentration is low, high ratio condensation of the ion in the ion trapping mass spectrometer becomes possible to permit a simplified pre-process, such as condensation of the sample or the like, in significant extent.

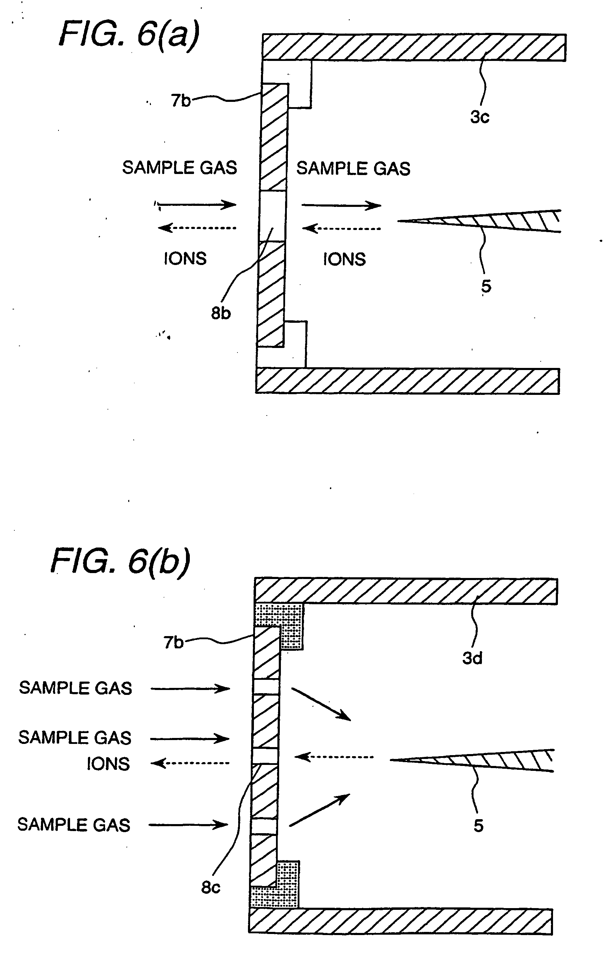

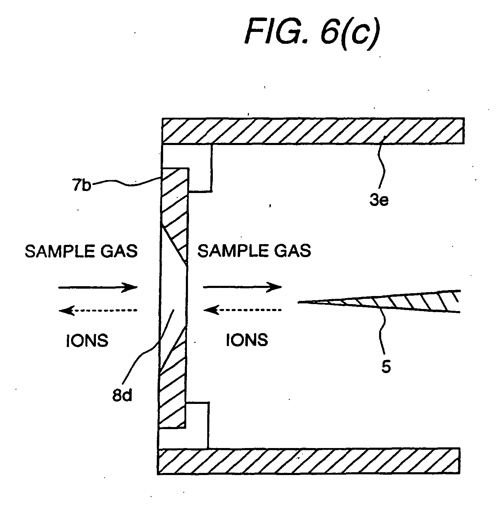

Figs. 6(a), 6(b) and 6(c) show several shapes of the counter electrodes 7. The ion and the sample are introduced into the corona discharge region in manners as shown in Figs. 6(a), 6(b) and 6(c). Fig. 6(a) shows a ordinary disc-shaped counter electrode, in which the ions and the sample are introduced into the corona charge portion from the opening portion 8b. Fig. 6(b) shows the counter electrode having a plurality of opening portions 8c, in which the ions pass through the opening portion in the center portion and the sample passes through the opening portions in the circumferential portion. Fig. 6(c) shows the case where the peripheral wail of the opening portion 8d is tapered, so that the ion passing through the opening portion 8d can be easily accelerated.

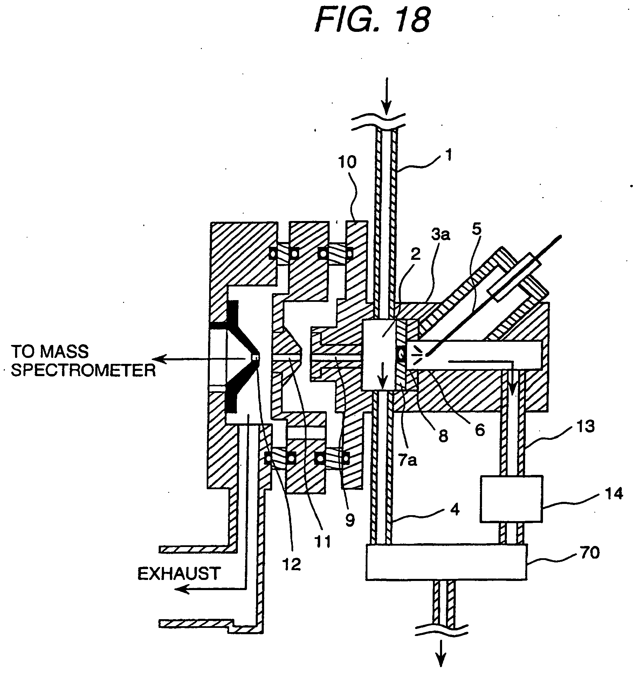

Fig. 18 shows a construction, in which a direction of flow of the sample gas from the region of corona discharge and a direction of extracting the ion are different similarly to Fig. 3. However, when an orientation of the needle is to be modified, the construction shown in Fig. 18 may be employed. Even in this case, by causing corona discharge between the tip end of the needle and the counter electrode 7a, a similar effect as that achieved by the construction shown in Fig. 3 can be achieved.

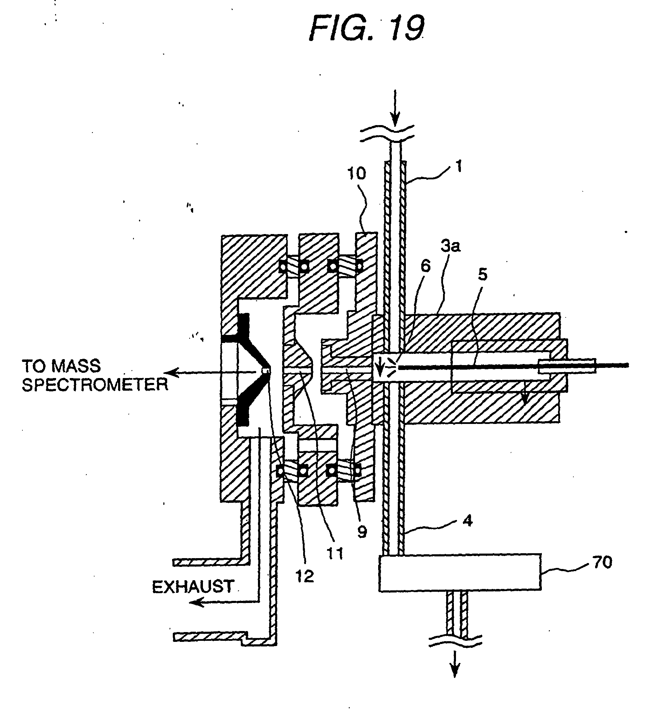

Fig. 19 shows an example which is not an embodiment of the invention, where the direction of flow of the sample from the corona discharge region 6 and the direction of extracting the ion are different but not in opposition. In case of Fig. 19, the direction of flow of the sample is different from the direction of the like connecting the tip end of the needle and the opening portion 9 in the extent of 90° . In this case, the ion and neutral molecule move in mutually perpendicular directions. However, by increasing the flow velocity of the sample gas, a similar effect to that achieved by the construction shown in Fig. 3 can be achieved. Similar effects can be obtained by providing a gradient differentiating moving direction other than opposite or perpendicular direction.

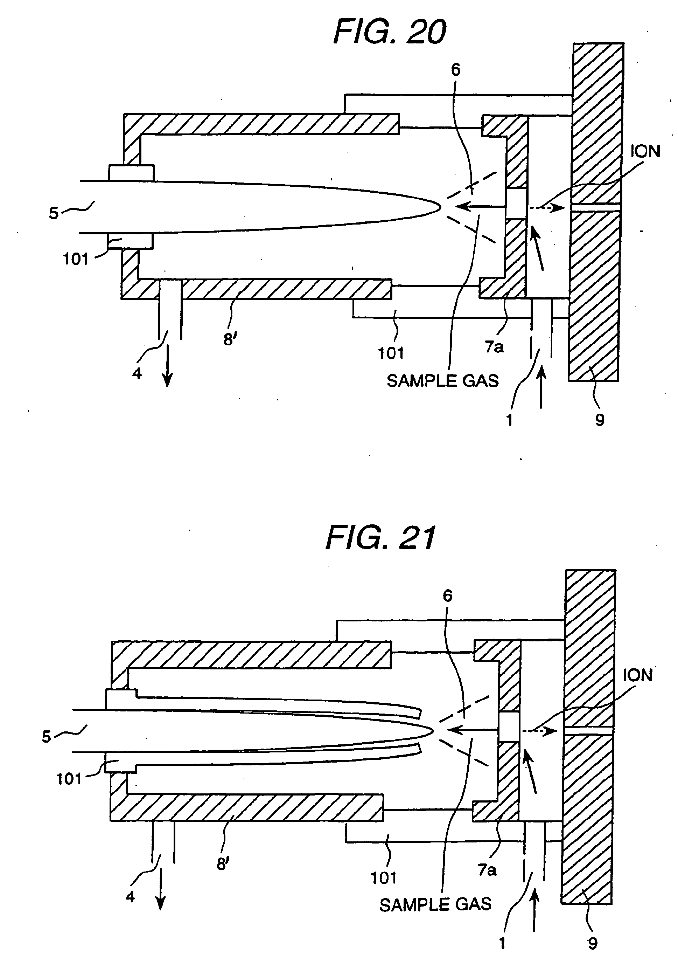

Fig. 20 shows a construction, in which the ion source of Fig. 3 is extended. By forming gas flow at the tip end of the needle, a stable corona discharge can be maintained for a long period. In this case, with taking ion generation efficiency into account, the gas is flown in the direction opposite to moving direction of the ion. As shown in Fig. 19, even when the direction of gas flow at the tip end of the needle is not opposite to the direction to the moving direction of the ion, the negative ions caused at the tip end of the needle can be sufficiently dispersed to maintain stable corona discharge for a long period by increasing flow velocity of the gas.

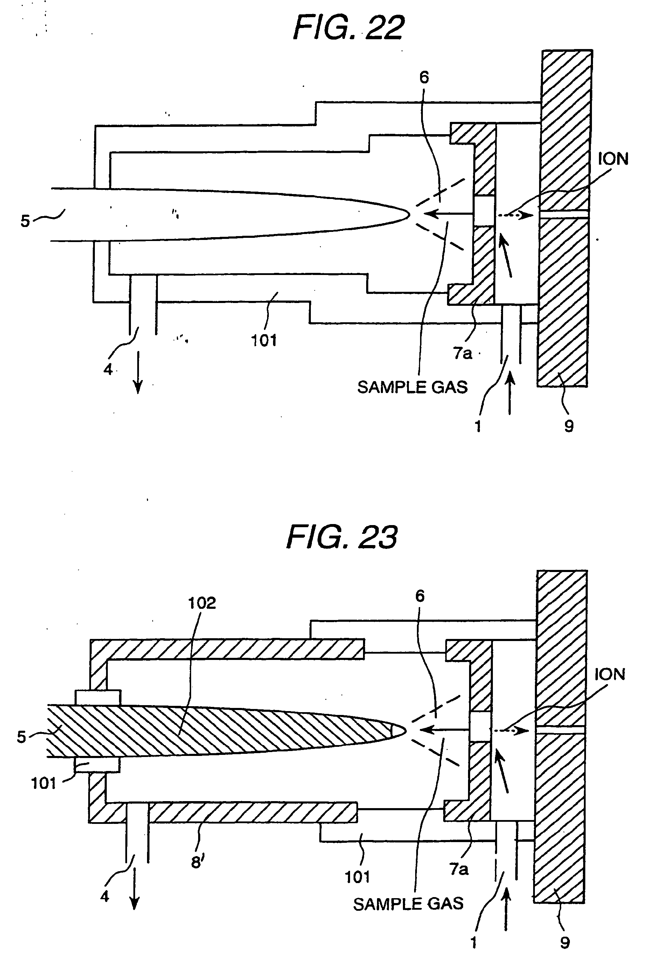

Fig. 21 shows an embodiment, in which the needle electrode to be applied the high voltage is covered with an insulator. When the ion source casing 8 is formed with a metal in view of machining, it is possible to cause discharge between the body of the needle electrode and the ion source casing. If discharge between the needle electrode and the counter electrode 7a fails, the amount of ion to pass through the aperture of the counter electrode is significantly reduced to lower the sensitivity of the mass spectrometer. In order to prevent this, the needle electrode is covered by the insulator so as not to cause discharge on the peripheral surface of the body of the needle electrode as shown in Fig. 21, or the ion source casing is formed with insulator as shown in Fig. 22. In the alternative, it is also effective to provide sufficient distance between the ion source casing 3 and the needle electrode 5. As a rough standard, it is preferred that when the distance between the needle electrode 5 and the counter electrode 7a is about 3 mm, a distance between the side surface of the needle electrode and the ion source casing is more than or equal to 5 mm.

On the other hand, as shown in Fig. 23, when the side surface of the needle electrode is coated by gold plating or hard chrome plating except for the tip end of the needle, discharge is hardly caused on the body of the needle electrode, and normal discharge between the needle electrode and the counter electrode can be easily caused to maintain stable discharge for a long period. Further, when corrosive gas, such as hydrogen chloride, is used, the needle electrode formed as set forth above is effective in view point of corrosion resistance.

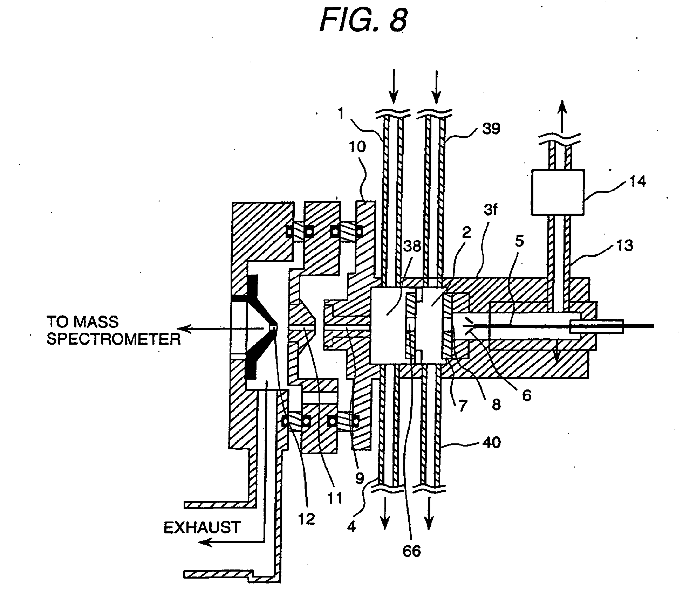

Fig. 8 shows an alternative embodiment of Fig. 3. The shown embodiment is basically similar to Fig. 3. In the following disclosure, corresponding components will be identified with identical reference numerals and discussion for such common component will be omitted in order to avoid redundant disclosure for keeping the disclosure simple enough to facilitate clear understanding of the present invention.

Fig. 3 shows the case where one ion drift region is provided. However, it is also possible to provide a plurality of ion drift regions. Fig. 8 shows the embodiment where second ion drift region 38 is provided in addition to the first ion drift portion 2, at a position adjacent to the latter. One example of the operation is as follows. The sample gas is introduced through the sample feed piping 1b and is discharged from the sample outlet piping 4b. At this time, a reactant gas, such as air, is introduced through a reactant gas inlet piping 39. When a part of the reactant gas is introduced into the corona discharge region, on the basis of the principle discussed in the foregoing embodiment (1), mainly O₂⁻ passes through the counter electrode 7a and the ion drift region 2. To the sample gas introduced through the sample feed piping 1b, for example, air containing chlorophenol or the like, O₂⁻ is driven through the second counter electrode 66, the ion of the chlorophenol is generated. Electric fields are provided between the counter electrode 7 and the second counter electrode 66 and between the second counter electrode 66 and the first ion sampling aperture 9. An inter-electrode distance between the counter electrode 7 and the second counter electrode 66 and the distance between the second counter electrode 66 and the first ion sampling aperture 9 are both about 1 to 10 mm. In measurement of the negative ion, when about -10V is applied to the first ion sampling aperture 9, about -1 kV, -2 kV are applied to the counter electrode 7 and the second counter electrode 66, respectively. These voltages control a retention period of O₂⁻ in the ion drift region 2, namely the reaction time. In the case where reaction of O₂⁻ in the ion drift region 2 is a problem, the retention period may be shortened by set voltage higher. The ion is introduced into the mass spectrometer through the first ion sampling aperture 9. Significant merit of construction set forth above is that when the sample gas is the exhaust gas of the incinerator, the exhaust gas is not introduced into the corona discharge region directly. Thereby, contamination of the needle electrode can be prevented to permit use for a long period.

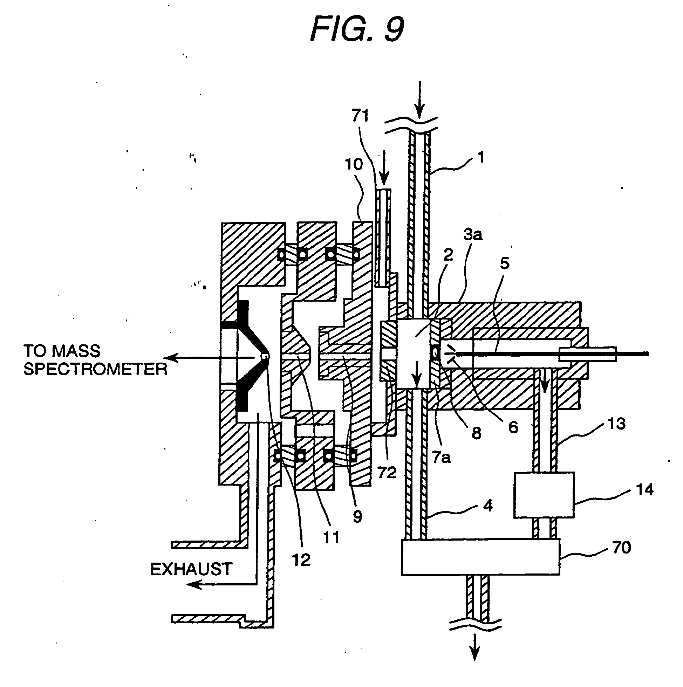

Fig. 9 is an alternative embodiment of Fig. 3. The shown embodiment is basically the same as that of Fig. 3. In the following disclosure, corresponding components will be identified with identical reference numerals and discussion for such common component will be omitted in order to avoid redundant disclosure for keeping the disclosure simple enough to facilitate clear understanding of the present invention.

In case of Fig. 3, ion is drifted between the counter electrode 7a and the first ion sampling aperture 9. In contrast to this, in addition to the construction set forth above, a counter gas outlet electrode 72 is provided in front of the first ion sampling aperture 9. A distance between the first ion sampling aperture 9 and the counter gas outlet electrode 72 is 0.1 to 5 mm. At the center of the counter gas outlet electrode 72, an opening portion of about 2 mm diameter is formed to permit the air introduced through a counter flow gas inlet 71 to flow toward the counter electrode 7a. Comparing with the diameter (about 0.25 mm) of the first ion sampling aperture 9, the center of the counter gas outlet electrode 72 is greater. At this time, between the counter gas outlet electrode 72 and the first ion sampling aperture 9, the ion is drifted toward the first ion sampling aperture 9 by the electric field. When the distance between the first ion sampling aperture 9 and the counter gas outlet electrode 72 is 0.5 mm, a voltage difference between the electrodes is about 10 to 500V. With taking such construction, a particle containing liquid droplet, dust hardly enter into the first ion sampling aperture 9 to efficiently introduce only ion.

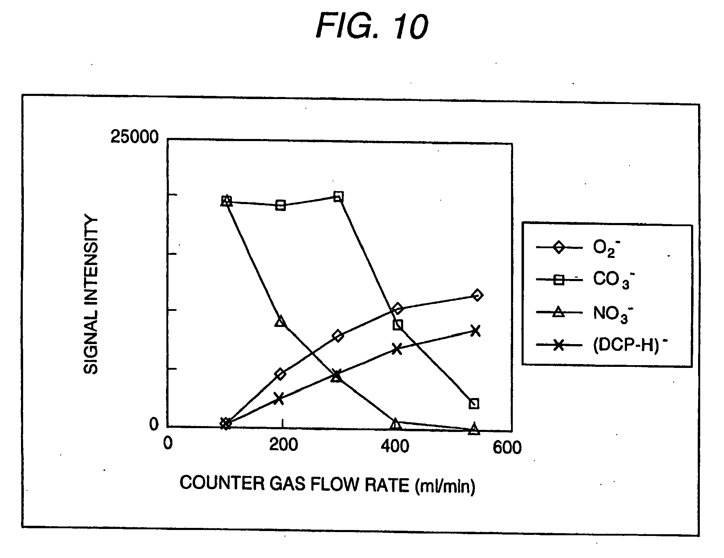

One of important parameters of the ion source to be used in the present invention is a flow rate of the sample to be introduced into the corona discharge region 3 from the sample feed piping 1. By setting and controlling the flow rate to be greater than or equal to a certain value, the ion of the sample can be stably measured in high sensitivity. A relationship between the flow rate of the sample to be introduced into the corona discharge region 3 from the sample feed piping 1 and ion strength of dichlorophenol or the like is shown in Fig. 10. At this time, negative corona discharge current is 5 µA, a distance between the counter electrode and the ion sampling aperture is 7 mm and a voltage therebetween is 800V. As can be appreciated from the drawing, by setting the flow rate to be introduced into the corona discharge region from the sample feed piping to be greater than or equal to about 100 ml/min, the ion strength of the dichlorophenol (corresponding to (DCP-H)⁻) in the drawing) can be significantly increased. On the other hand, strengths of NO₃⁻ (ion corresponding to mass number 62), CO₃⁻ or N₂O₂⁻ (ion corresponding to mass number 60) are reduced according to the increase of the flow rate. In the ion source according to the present invention, usefulness of setting the flow rate of the sample to be introduced into the corona discharge region, greater than or equal to a certain value (for example, 100 ml/min) can be appreciated herefrom.

According to the increase of the flow rate of the sample to be introduced into the corona discharge region, a linear velocity of an intermediate (NO) generated in the corona discharge region is also increased. Accordingly, the fact that presence period of the intermediate in the corona discharge region is shortened, can be appreciated. As a result, generation of NO₃⁻ can be restricted to significantly increase ion strength of the dichlorophenol (corresponding to (DCP-H)⁻ in the drawing). The merit of increasing of flow rate of the sample to be introduced into the corona discharge region is as set forth above.

A CO₃⁻ signal intensity is lowered when the sample flow rate becomes greater than or equal to 300 ml/min. When the flow rate becomes greater than or equal to 400 ml/min, a signal intensity of O₂⁻ and (DCP-H)⁻ becomes greater than either of those of NO₃⁻ and CO₃⁻ to achieve higher precision measurement. As set forth above, by controlling the counter gas flow, the signal intensity can be controlled.

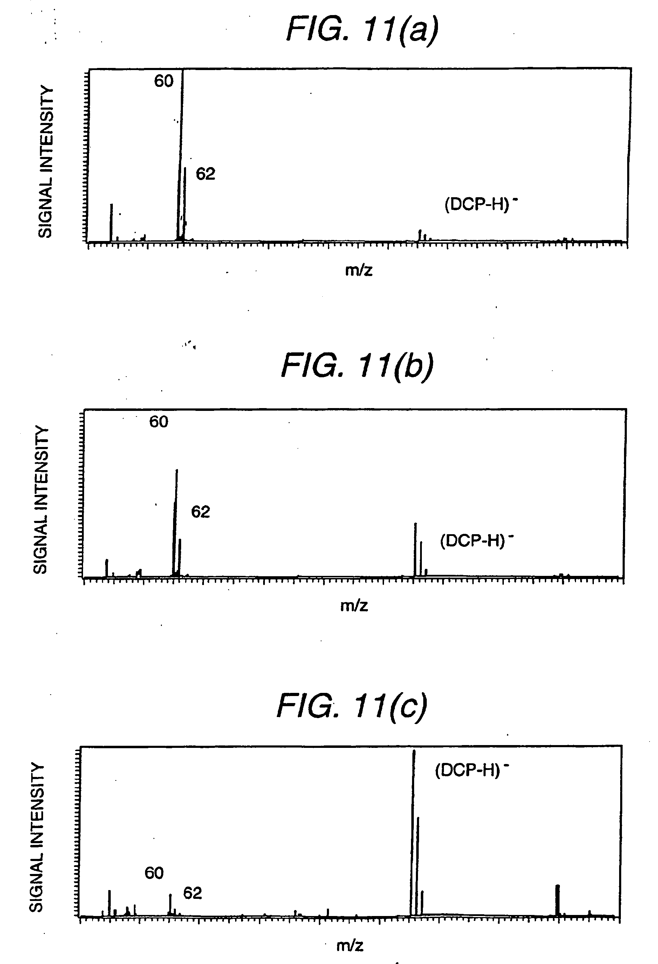

By employing the ion source of the present invention, fine component in the air can be detected in high sensitivity. Figs. 11(a), 11(b) and 11(c) show a difference of the mass spectra obtained when the conventional ion source is used and when the present invention is used using dichlorophenol (concentration 5 µg/Nm³) in the air. At this time, negative corona discharge current is 5 µA, a distance between the counter electrode and the ion sampling aperture is 7 mm and a voltage therebetween is 800V (voltage applied to the counter electrode is -850V and voltage applied to the ion sampling aperture is -50V). In the conventional ion source, while extremely strong NO₃⁻ is monitored, only asmall amount of negative ions (CP-H)⁻ originated from chlorophenol can be monitored (Fig. 11(a)). In contrast to this, in the ion source of the present invention, it can be appreciated that in addition to relative strength of (CP-H)⁻ relative to NO₃⁻, absolute sensitivity is improved significantly (Figs. 11(b) and 11(c)).

Here, Figs. 11(b) and 11(c) show mass spectra obtained when the flow rates of the sample to be introduced into the corona discharge region are 200 and 500 ml/mm, respectively. Application to Explosive Detector

Next, discussion will be given for application of the ion source according to the present invention to an explosive detector.

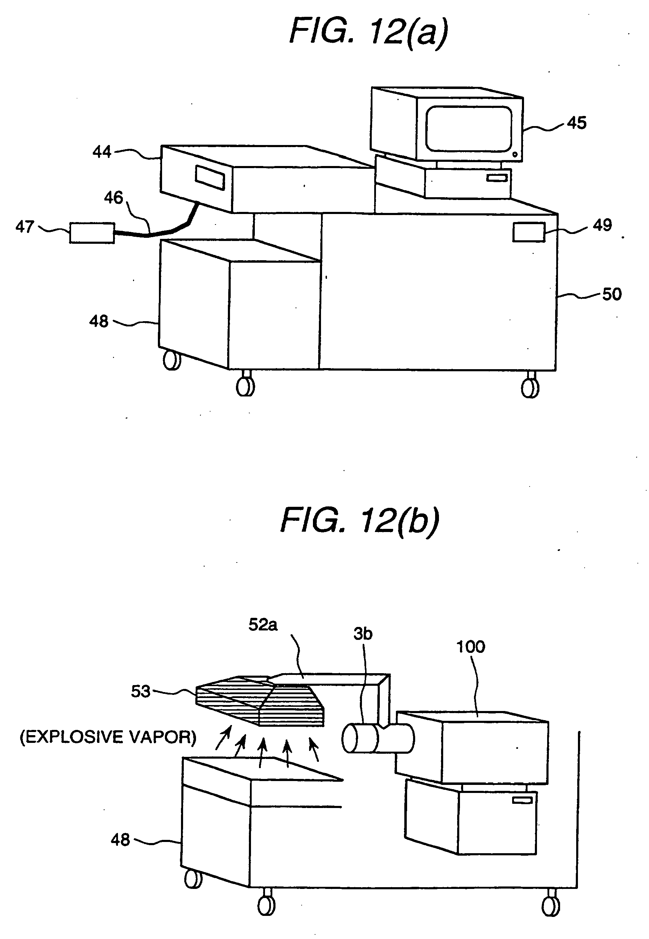

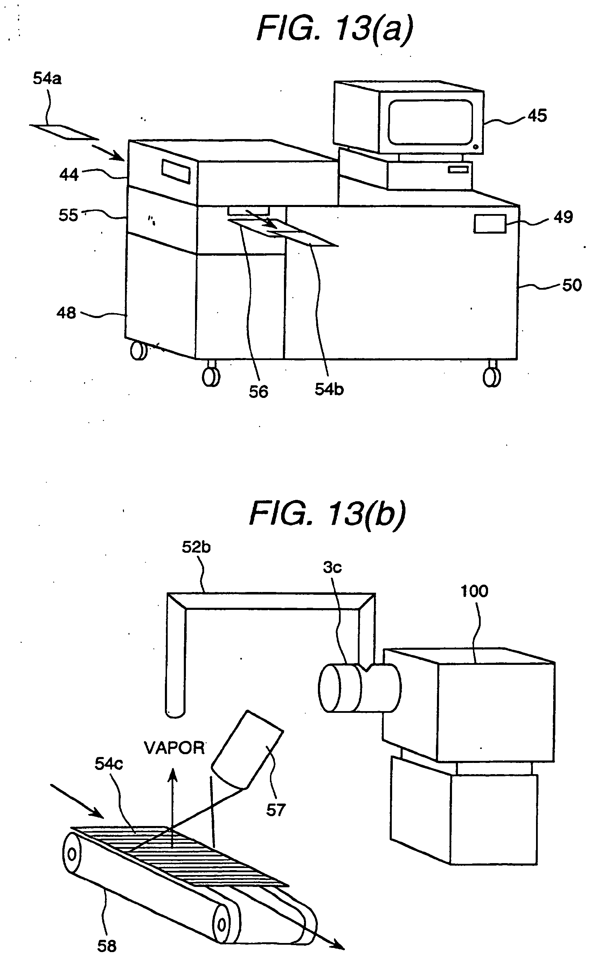

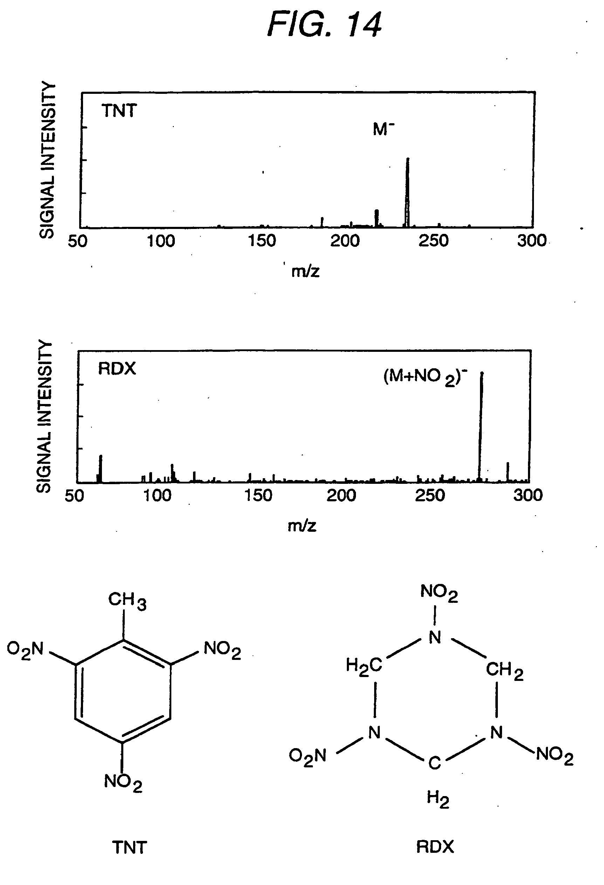

Figs. 12 and 13 show construction of an explosive detector 33 for detecting explosive or drug in a public facility, such as an airport. Upon detection of explosive, such as nitro compound, a system using the mass spectrometer having the ion source according to the present invention is effective. In Fig. 14, mass spectra of TNT and RDX as nitro compounds are shown, it can be appreciated that M⁻ or (M+NO₂)⁻ is monitored.

Upon detection of the explosive, presence of explosive is checked by using a probe or duct sucking a sample gas, for sucking, ionizing and detecting the vapor of explosive leaking from luggage 35 or cargo in off-line or on-line. Fig. 12(a) shows the case where a suction probe for sucking the sample gas through sample gas inlet 44, a inlet piping 46 and inlet opening 47. On the other hand, Fig. 12(b) shows the case where a duct 53 connected to a sample gas feed piping 52 and the corona discharge region 3. On the other hand, it is also possible to take holding pass or passport as object for inspection 54, as shown in Fig. 13. At this time, the object for inspection 54 is moved at a position below the sample gas feed piping 52 by a conveyer containing in a inspection scanner 55, a vapor of the explosive is sucked with respect to the inspection object 54. The ion generated through the sample gas feed piping 52 and the corona discharge region 3 is detected by the mass spectrometer 100. At this time, it is effective to heat the inspection object at a temperature higher than the room temperature (about 40 to 60 °C) by a heater 57. The moved inspection object 54 is held on a support 56 after inspection.

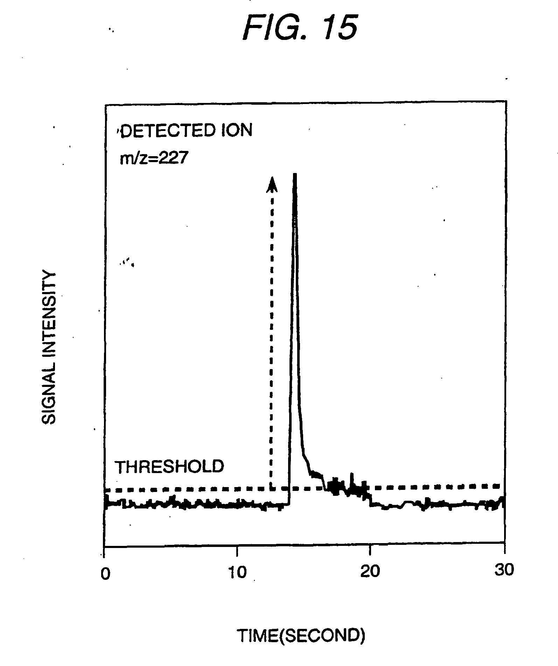

The explosive as typified by nitro compound, easily becomes negative ion by negative corona discharge similarly to the organic chlorine-based chemical compound. Therefore, the shown system is effective for detecting explosive. Normally, in a display device 45 in the explosive detector 33, variation in time of the generated ion strength (mass chromatograph) and so forth are displayed. When explosive, such as TNT is present in the vapor to be analyzed, the ion strength corresponding to the molecular amount of TNT is increased. When abnormality is not detected by this explosive detector 33, the luggage may pass through. If abnormality is detected, detailed re-inspection is performed. By providing a certain threshold value in the ion intensity corresponding to the molecular amount of TNT, if the ion strength is increased beyond the threshold value, judgment is made that TNT is present, in the vapor. At this time, an algorithm is employed to regard as signal when the presence of TNT is monitored for a predetermined period or longer, in order to discriminate from mere spike noise. By adding such algorithm, malfunction can be reduced. The condition is illustrated in Fig. 15. At this time, as a final display, the following case can be considered. An indicator of the substance corresponding to the ion to be detected is displayed on the display, and according to the algorithm set forth above, if A is detected, A is blinked to indicate detection of A. At this time, it may be possible to additionally provide indicator indicating extent of concentration (which may be an information indicative the amount is large or small, simply) or an alarm. This is a common idea for other dangerous substances. Namely, in case of a plastic bomb, if the explosive is present in the luggage as a thick mass, it can be detected by an X-ray inspection device. However, if the plastic bomb is in a thin sheet form, most of X-ray may pass through to possibly be overlooked by the X-ray inspection device and thus is difficult to detect. At this time, by using the explosive detector, the explosive can be detected as far as the vapor leaks within the luggage or out of the luggage. Thus, probability of detection of the explosive can be significantly increased in comparison with the X-ray inspection device. Also, in case of re-inspection, whether the substance in the luggage is explosive or not can be instantly checked by analysis of the vapor, and the kind of explosive can also be detected. Therefore, in such case, the explosive detector having the ion source according to the present invention is advantageous to the X-ray inspection device.

On the other hand, a similar idea is applicable for the detection of medical substances, such as drug or the like. In this case, utilizing the property of the material, such as drug, stimulant drug or the like containing nitrogen to have high affinity with proton, the positive ion originated from the drug is detected utilizing positive corona discharge. Primary form of the ion generated from the drug or the like, is the form where proton is added to the molecule of (M+H)⁺.

It is important to provide casters 50 for the explosive detector to make it movable. It is also important to provide a simple monitor control portion 49 to facilitate start up of the device.

### Application to Liquid Chromatography

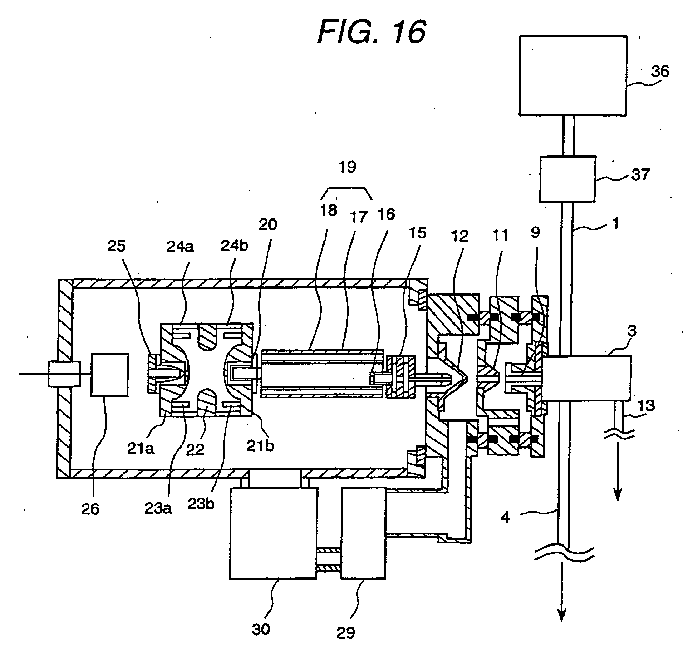

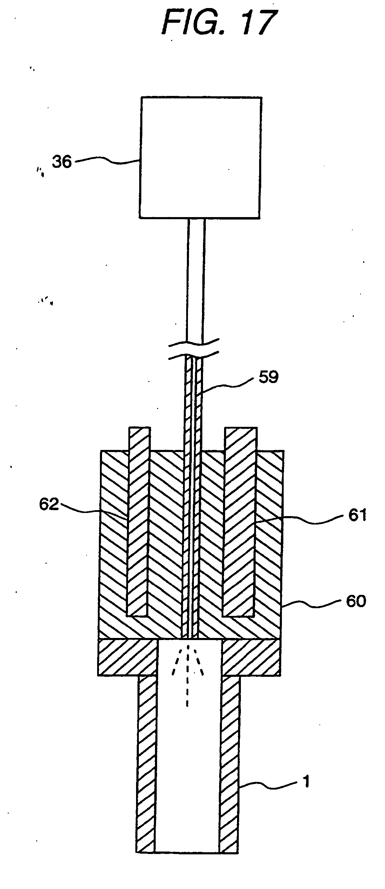

The ion source according to the present invention is further applicable as the ion source to be used in a liquid chromatograph mass spectrometer. A construction of the liquid chromatograph mass spectrometer is shown in Fig. 16. Namely, an eluate from the liquids chromatograph 36 is vaporized by an appropriate vaporizer (comprising a conduit 59 for spraying by heating or by gas). Then, the vapor is introduced into the ion source of the present invention to ionization, and the generated ion is detected by the mass spectrometer. Employing the ion source of the present invention, since the sample can be ionized at high efficiency, sensitivity in detection can be significantly enhanced. In Fig. 17, heating type vaporizer 37 is employed. Namely, a metal block is welled to the conduit 59. The metal block 60 can be controlled a temperature by a thermocouple 62 and a cartridge heater 61. The eluate from the liquid chromatograph 36 is converted into a fine liquid droplet in the terminal at the end of the conduit 59.

As set forth above, according to the present invention, the direction of flow of the sample relative to the corona discharge region and the direction to extract the ion by corona discharge are different. Therefore, a presence period of the intermediate in the corona discharge region can be shortened. Therefore, the ion of the objective sample can be efficiently generated. Also, according to the present invention, high selectivity and high sensitivity measurement of the ion of the sample becomes possible. In addition, even when deposition is deposited at the tip end of the needle electrode, discharge can be maintained stably for a long period, for example 2 months or more.

Although the present invention has been illustrated and described with respect to exemplary embodiment thereof, it should be understood by those skilled in the art that the foregoing and various other changes, omissions and additions may be made therein and thereto, without departing from the scope of the present invention. Therefore, the present invention should not be understood as limited to the specific embodiment set out above but to include all possible embodiments which can be embodied within a scope encompassed and equivalents thereof with respect to the feature set out in the appended claims.

## Claims

1. An ion source comprising:
a first chamber with a needle electrode (5) arranged therein;
a first opening portion (8) for introducing ions generated in said first chamber into a mass spectrometric portion; and
a second opening portion for supplying a sample gas,
wherein said second opening portion is located so that the angle formed by the direction connecting the tip end of said needle electrode (5) and said first opening portion (8) and the direction connecting the centre of said second opening portion and said tip end of said needle electrode (5) is less than or equal to 90°,
**characterised in that** the ion source has a construction such that the sample gas is introduced to the tip end of said needle electrode (5) along an introducing direction wich is substantially opposite to the withdrawing direction of the ions generated in said first chamber into said mass spectrometric portion.

2. The ion source of claim 1, wherein ionisation is performed within a corona discharge region (3) by said needle electrode (5).

3. The ion source of claim 2, wherein a first drift region (2) of the ions by an electric field is located adjacent said corona discharge region (3).

4. The ion source of claim 1, wherein
said sample gas is ionised by a discharge in said first chamber;
a third opening portion is formed on the side of the root of said needle electrode (5).

5. The ion source of claim 1, wherein said needle electrode (5) is covered with an insulator or a plating.

6. The ion source of claim 1, wherein the distance between a wall member defining said first chamber and said needle electrode (5) is greater than the distance between the tip end of said needle electrode and the centre of said first opening portion (8).

7. The ion source of claim 1, wherein
said needle electrode (5) is covered with an insulator, and
said first chamber is defined by a wall member formed of an insulator.

8. The ion source of claim 1, including a monitor (32) for measuring the current flowing through said needle electrode (5).

9. The ion source of claim 1, further comprising:
a first drift region (2) adjacent to said first chamber via said first opening portion for causing drift of the ions by an electric field; and
a second drift region (38) provided adjacent to said first drift region (2) for introducing a reaction gas into said first drift region and introducing the sample gas into said second drift region (38).

10. The ion source of claim 9, wherein
said reaction gas flows from said first drift region (2) to said first chamber,
said sample gas flows from said second drift region (38) to said first drift region (2), and
said ions pass from said first chamber to said second drift region (38) through said first drift region (2).

11. A spectrometer comprising:
the ion source of claim 1;
a first partitioning wall (7) having said first opening portion (8);
a second chamber formed in said first chamber via said first partitioning wall (7); and
a second partitioning wall (66) having a third opening portion for introducing ions from said second chamber into said mass spectrometric portion,
wherein the absolute value of the voltage applied to said needle electrode (5) is greater than that of the voltage applied to said first partitioning wall (7), which in turn is greater than that of the voltage applied to said second partitioning wall (66).

12. A measuring system having the ion source of claim 1, and restricting the signal amplitude with respect to the mass number of NO₃ generated by O₂ generated by a negative corona discharge in said corona discharge region (3) by restricting the NO₃ generating reaction by reaction of O₂ and N₂ for measuring a fine component in a gas selected from chlorophenols, dioxins, chlorobenzenes, hydrocarbons, and nitro compounds being a precursor of said dioxins.

13. A monitoring system comprising:
an exhaust passage (30) for discharging flue gas of combustion;
a sampling pipe (63) collecting said flue gas in a part of said exhaust passage (30);
a filter (64) for removing unnecessary components from the gas from said sampling pipe (63); and
a mass spectrometer (100) having the ion source of claim 1, for receiving the flue gas passing through said filter (64), analysing the flue gas, and monitoring generated dioxins on the basis of the analysis result.

14. An incinerator comprising:
a mass spectrometer (100) having the ion source of claim 1, for receiving the flue gas passing through a filter (64); and
a monitoring system for analysing the flue gas in said mass spectrometer (100) and monitoring generated dioxins on the basis of the analysis result, for controlling the operation on the basis of the analysis result from said mass spectrometer.

15. An explosive detector comprising:
a probe for sampling a gas;
a mass spectrometer (100) having the ion source of claim 1, wherein said first chamber receives the sample gas from said probe; and
a display (45) for displaying a result of judgement made by said mass spectrometer (100).

16. An explosive detector comprising:
an inspection object scanning portion (55) for inspecting an object (54);
a suction device (52) for sucking a sample gas from said inspection object (54); and
a mass spectrometer (100) having the ion source of claim 1, for making a judgement, wherein said first chamber receives the sample gas from said suction device (52).

17. The detector of claim 16, wherein said inspection object scanning portion (55) samples said sample gas by moving said inspection object (54) on a movable base.

## Patentansprüche

1. Ionenquelle mit
einer ersten Kammer mit einer darin angebrachten Nadelelektrode (5),
einem ersten Öffnungsabschnitt (8), um in der ersten Kammer erzeugte Ionen in einen Massenspektrometerabschnitt einzuführen, und
einem zweiten Öffnungsabschnitt zum Zuführen eines Probengases,
wobei der zweite Öffnungsabschnitt so angeordnet ist, dass der Winkel, der durch die das Spitzenende der Nadelelektrode (5) und den ersten Öffnungsabschnitt (8) verbindende Richtung und die die Mitte des zweiten Öffnungsabschnitts und das Spitzenende der Nadelelektrode (5) verbindende Richtung gebildet ist, höchstens 90° beträgt,
**dadurch gekennzeichnet, dass** die Ionenquelle so aufgebaut ist, dass das Probengas zu dem Spitzenende der Nadelelektrode (5) längs einer Zuführrichtung eingeführt wird, die im Wesentlichen entgegengesetzt zu der Entnahmerichtung der in der ersten Kammer erzeugten Ionen in den Massenspektrometerabschnitt ist.

2. Ionenquelle nach Anspruch 1, wobei die Ionisation innerhalb der Korona-Entladungsregion (3) durch die Nadelelektrode (5) durchgeführt wird.

3. Ionenquelle nach Anspruch 2, wobei eine erste Driftregion (2) der Ionen durch ein elektrisches Feld neben der Korona-Entladungsregion (3) angeordnet ist.

4. Ionenquelle nach Anspruch 1, wobei
das Probengas durch eine Entladung in der ersten Kammer ionisiert ist und
ein dritter Öffnungsabschnitt auf der Seite des Fußes der Nadelelektrode (5) gebildet ist.

5. Ionenquelle nach Anspruch 1, wobei die Nadelelektrode (5) mit einem Isolator oder einer Plattierung überzogen ist.

6. Ionenquelle nach Anspruch 1, wobei der Abstand zwischen einem die erste Kammer eingrenzenden Wandelement und der Nadelelektrode (5) größer ist als der Abstand zwischen dem Spitzenende der Nadelelektrode und der Mitte des ersten Öffnungsabschnitts (8).

7. Ionenquelle nach Anspruch 1, wobei
die Nadelelektrode (5) mit einem Isolator überzogen ist, und
die erste Kammer durch ein aus einem Isolator gebildetes Wandelement eingegrenzt ist.

8. Ionenquelle nach Anspruch 1, mit einer Überwachungseinheit (32) zum Messen des durch die Nadelelektrode (5) fließenden Stroms.

9. Ionenquelle nach Anspruch 1, ferner mit
einer ersten Driftregion (2), die über den ersten Öffnungsabschnitt an die erste Kammer angrenzt, um eine Drift der Ionen durch ein elektrisches Feld hervorzurufen, und
einer zweiten Driftregion (38), die neben der ersten Driftregion (2) angeordnet ist, um ein Reaktionsgas in die erste Driftregion einzuführen und das Probengas in die zweite Driftregion (38) einzuführen.

10. Ionenquelle nach Anspruch 9, wobei
das Reaktionsgas von der ersten Driftregion (2) in die erste Kammer strömt,
das Probengas von der zweiten Driftregion (38) in die erste Driftregion (2) strömt und
die Ionen von der ersten Kammer durch die erste Driftregion (2) in die zweite Driftregion (38) gelangen.

11. Spektrometer mit
der Ionenquelle nach Anspruch 1,
einer ersten Trennwand (7), die den ersten Öffnungsabschnitt (8) aufweist,
einer zweiten Kammer, die über die erste Trennwand (7) in der ersten Kammer gebildet ist, und
einer zweiten Trennwand (66), die einen dritten Öffnungsabschnitt aufweist, um Ionen von der zweiten Kammer in den Massenspektrometerabschnitt einzuführen,
wobei der Absolutwert der an die Nadelelektrode (5) angelegten Spannung größer ist als die an die erste Trennwand (7) angelegte Spannung, die wiederum größer ist als die an die zweite Trennwand (66) angelegte Spannung.

12. Messsystem mit der Ionenquelle nach Anspruch 1, das dazu geeignet ist, die Signalamplitude bezüglich der Massenzahl von NO₃, das durch bei einer negativen Korona-Entladung in der Korona-Entladungsregion (3) erzeugtes O₂ erzeugt wurde, durch Beschränken der NO₃-Erzeugungsreaktion durch Reaktion von O₂ und N₂ zu beschränken, um eine Feinkomponente in einem Gas zu messen, das ausgewählt ist aus Chlorphenolen, Dioxinen, Chlorbenzolen, Kohlenwasserstoffen und Nitroverbindungen, die ein Präkursor der Dioxine sind.

13. Überwachungssystem mit
einer Abgasleitung (30) zum Auslassen eines Verbrennungsgases,
einem Probennahmerohr (63), das das Verbrennungsgas in einem Teil der Abgasleitung (30) sammelt,
einem Filter (64) zum Entfernen unnötiger Komponenten aus dem Gas von dem Probennahmerohr (63) und
einem Massenspektrometer (100), das die Ionenquelle nach Anspruch 1 aufweist, um das durch den Filter (64) gelangende Verbrennungsgas aufzunehmen, das Verbrennungsgas zu analysieren und erzeugte Dioxine auf der Grundlage des Analyseergebnisses zu überwachen.

14. Verbrennungsofen mit
einem Massenspektrometer (100) mit der Ionenquelle nach Anspruch 1, um das durch einen Filter (64) gelangende Verbrennungsgas aufzunehmen, und
einem Überwachungssystem zum Analysieren des Verbrennungsgases in dem Massenspektrometer (100) und zum Überwachen erzeugter Dioxine auf Grundlage des Analyseergebnisses, um den Betrieb auf der Grundlage des Analyseergebnisses von dem Massenspektrometer zu steuern.

15. Sprengstoffdetektor mit
einer Sonde zur Probenentnahme eines Gases,
einem Massenspektrometer (100) mit der Ionenquelle nach Anspruch 1, wobei die erste Kammer das Probengas von der Sonde empfängt, und
einer Anzeige (45) zum Anzeigen eines Ergebnisses einer durch das Massenspektrometer (100) vorgenommenen Beurteilung.

16. Sprengstoffdetektor mit
einem Untersuchungsobjekt-Abtastabschnitt (55) zum Untersuchen eines Objekts (54),
einer Ansaugvorrichtung (52) zum Ansaugen eines Probengases von dem Untersuchungsobjekt (54) und
einem Massenspektrometer (100) mit der Ionenquelle nach Anspruch 1, um eine Beurteilung vorzunehmen, wobei die erste Kammer das Probengas von der Ansaugvorrichtung (52) empfängt.

17. Detektor nach Anspruch 16, wobei der Untersuchungsobjekt-Abtastabschnitt (55) Proben des Probengases entnimmt, indem das Untersuchungsobjekt (54) auf einer beweglichen Basis bewegt wird.

## Revendications

1. Source d'ions comportant :
une première chambre ayant une électrode aiguille (5) agencée sur celle-ci,
une première partie d'ouverture (8) pour introduire des ions générés dans ladite première chambre dans une partie de spectrométrie de masse, et
une seconde partie d'ouverture pour délivrer un gaz échantillon,
dans lequel ladite seconde partie d'ouverture est localisée de sorte que l'angle formé par la direction connectant l'extrémité d'embout de ladite électrode aiguille (5) et ladite première partie d'ouverture (8) et la direction connectant le centre de ladite seconde partie d'ouverture et ladite extrémité d'embout de ladite électrode aiguille (5) est inférieur ou égal à 90°,
**caractérisé en ce que** la source d'ions a une structure telle que le gaz échantillon est introduit dans l'extrémité d'embout de ladite électrode aiguille (5) selon une direction d'introduction sensiblement opposée à la direction de retrait des ions générés dans ladite première chambre dans ladite partie de spectrométrie de masse.

2. Source d'ions selon la revendication 1, dans laquelle une l'ionisation est effectuée dans une région d'effluve (3) par ladite électrode aiguille (5).

3. Source d'ions selon la revendication 2, dans laquelle une première région de dérive (2) des ions par un champ électrique est localisée à proximité adjacente de ladite région d'effluve (3).

4. Source d'ions selon la revendication 1, dans laquelle
ledit gaz échantillon est ionisé par une décharge dans ladite première chambre,
une troisième partie d'ouverture est formée sur le côté du fond de ladite électrode aiguille (5).

5. Source d'ions selon la revendication 1, dans laquelle ladite électrode aiguille (5) est recouverte d'un isolant ou d'un revêtement métallique.

6. Source d'ions selon la revendication 1, dans laquelle la distance entre un élément de paroi définissant ladite première chambre et ladite électrode aiguille (5) est supérieure à la distance entre l'extrémité d'embout de ladite électrode aiguille et le centre de ladite première partie d'ouverture (8).

7. Source d'ions selon la revendication 1, dans laquelle
ladite électrode aiguille (5) est recouverte d'un isolant, et
ladite première chambre est définie par un élément de paroi formé d'un isolant.

8. Source d'ions selon la revendication 1, incluant un moniteur (32) pour mesurer le courant circulant à travers ladite électrode aiguille (5).

9. Source d'ions selon la revendication 1, comportant en outre :
une première région de dérive (2) adjacente à ladite première chambre via ladite première partie d'ouverture pour provoquer la dérive des ions par l'intermédiaire d'un champ électrique, et
une seconde région de dérive (38) agencée à proximité adjacente de ladite première région de dérive (2) pour introduire un gaz de réaction dans ladite première région de dérive et introduire le gaz échantillon dans ladite seconde région de dérive (38).

10. Source d'ions selon la revendication 9, dans laquelle
ledit gaz de réaction circule depuis ladite première région de dérive (2) vers ladite première chambre,
ledit gaz échantillon circule depuis ladite seconde région de dérive (38) vers ladite première région de dérive (2), et
lesdits ions passent de ladite première chambre à ladite seconde région de dérive (38) via ladite première région de dérive (2).

11. Spectromètre comportant :
la source d'ions selon la revendication 1,
une première paroi de cloisonnement (7) ayant ladite première partie d'ouverture (8),
une seconde chambre formée dans ladite première chambre via ladite première paroi de partitionnement (7), et
une seconde paroi de cloisonnement (66) ayant une troisième partie d'ouverture pour introduire des ions depuis ladite seconde chambre dans ladite partie de spectrométrie de masse,
dans lequel la valeur absolue de la tension appliquée à ladite électrode aiguille (5) est supérieure à celle de la tension appliquée à ladite première paroi de cloisonnement (7), laquelle à son tour est supérieure à celle de la tension appliquée à ladite seconde paroi de partitionnement (66).

12. Système de mesure ayant la source d'ions selon la revendication 1, et limitant l'amplitude de signal par rapport au nombre de masse de NO₃ généré par O₂ généré par une effluve négative dans ladite région d'effluve (3) en limitant la réaction de génération NO₃ par réaction de O₂ et N₂ pour mesurer une composante fine dans un gaz sélectionné à partir de chlorophénols, dioxines, chlorobenzènes, hydrocarbures, et composés nitrurés étant un précurseur desdites dioxines.

13. Système de surveillance comportant :
un canal d'échappement (30) pour évacuer du gaz de carneau de combustion,
un tube d'échantillonnage (103) collectant ledit gaz de carneau dans une partie dudit canal d'échappement (30),
un filtre (104) pour retirer des composantes inutiles du gaz à partir dudit tube d'échantillonnage (63), et
un spectromètre de masse (100) ayant la source d'ions selon la revendication 1, pour recevoir l'effluve passant à travers ledit filtre (104), analyser le gaz de carneau, et surveiller des dioxines générées sur la base du résultat d'analyse.

14. Incinérateur comportant :
un spectromètre de masse (100) ayant la source d'ions selon la revendication 1, pour recevoir le gaz de carneau passant à travers un filtre (64), et
un système de surveillance pour analyser le gaz de carneau dans ledit spectromètre de masse (100) et surveiller des dioxines générées sur la base du résultat d'analyse, pour commander le fonctionnement sur la base du résultat d'analyse depuis ledit spectromètre de masse.

15. Détecteur d'explosifs comportant :
une sonde pour échantillonner un gaz,
un spectromètre de masse (100) ayant la source d'ions selon la revendication 1, dans lequel ladite première chambre reçoit le gaz échantillon en provenance de ladite sonde, et
un écran (45) pour afficher un résultat de la détermination effectuée par ledit spectromètre de masse (100).

16. Détecteur d'explosifs comportant :
une partie de balayage d'objet d'inspection (55) pour inspecter un objet (54),
un dispositif d'aspiration (52) pour aspirer un gaz échantillon à partir dudit objet d'inspection (54), et
un spectromètre de masse (100) ayant la source d'ions selon la revendication 1, pour effectuer une détermination, ladite première chambre recevant le gaz échantillon en provenance dudit dispositif d'aspiration (52).

17. Détecteur selon la revendication 16, dans lequel ladite partie de balayage d'objet d'inspection (55) échantillonne ledit gaz échantillon en déplaçant ledit objet d'inspection (54) sur une base mobile.
